# EUROPÄISCHE PATENTSCHRIFT

(11) **EP 3 135 962 B1**
(45) Veröffentlichungstag und Bekanntmachung des Hinweises auf die Patenterteilung: **27.03.2019**
(21) Anmeldenummer: 16185515.0
(22) Anmeldetag: 24.08.2016
(51) Int. Cl.: F16J 15/02, E06B 7/16, F16J 15/06, B60J 10/17, B60J 10/24

(54) **DICHTELEMENT**
SEAL ELEMENT
ÉLEMENT D'ETANCHEITE

(30) Priorität: 27.08.2015 DE 102015114217
(43) Veröffentlichungstag der Anmeldung: 01.03.2017
(73) Patentinhaber: Semperit AG Holding, 1031 Wien (AT)
(72) Erfinder: MIEßBACHER, Herwig, 8734 Großlobming (AT); Schwaiberger, Gerhard, 94560 Offenberg (DE)
(74) Vertreter: Müller Schupfner & Partner Patent- und Rechtsanwaltspartnerschaft mbB

(56) Entgegenhaltungen:
- EP-A1- 2 792 520
- DE-A1- 3 239 395
- DE-U1-202007 017 302
- US-A1- 2006 192 349

## Beschreibung

Die vorliegende Erfindung betrifft ein Dichtelement, insbesondere ein Dichtprofil für Fenster oder Türen, eine Anordnung aus einem Element, insbesondere einem Fenster- oder Türelement, und einem Dichtelement, sowie ein Verfahren zur Herstellung eines Dichtelements.

Zur Abdichtung von Fenstern oder Türen bzw. Fenster- oder Türelementen sind aus dem Stand der Technik Bürstendichtungen bekannt. Diese bringen den Vorteil mit sich, dass sie ein elastisches Verhalten aufweisen und sehr gleitfähig sind. Damit werden geringe Bedienkräfte ermöglicht. Nachteilig daran ist aber, dass sie, zum Beispiel bei Windbelastung oder Schlagregeneinwirkung, undicht sind. Demgegenüber stellen Gummidichtungen, wie beispielsweise TPE-Dichtungen (TPE, Thermoplastische Elastomere), eine hohe Dichtwirkung bereit, erfordern beim Schließen oder Öffnen allerdings höhere Bedienkräfte.

Aus der DE 20 2007 017 302 U1 kennt der Stand der Technik ferner eine Gleitdichtung für Fenster, Türen, Rollläden und dergleichen, die einen Dichtfuß sowie ein Hohlkörperprofil umfasst, wobei ein Dichtbereich eine Dichtfläche in Form einer Gleitschicht umfasst und wobei die Gleitschicht ausgelegt ist, eine Gleitfähigkeit des Dichtelements zu erhöhen und an dem Dichtbereich befestigt ist.

Die Druckschrift EP 2 792 520 A1 zeigt ein Dichtungsprofil zum Abdichten eines Spalts. Dabei umfasst das Dichtungsprofil ein Kontaktbereich, der eine Beschichtung aufweist, die gleit- und haftmindernd sein soll.

Die Druckschrift DE 32 39 395 A1 betrifft eine Profilleiste zur Abdichtung beispielsweise gegenüber einem Fenster. Die Oberfläche der Profilleiste weist poly meres Material mit einem kleinen Reibungswert auf. Das polymere Material ist in Form von "Belägen" aufgebracht.

Das Dokument US 2006 019 2349 A1 betrifft ferner ein Dichtelement, umfassend einen Anordnungsbereich sowie einen Dichtbereich, wobei der Dichtbereich eine Dichtfläche aufweise, die zumindest bereichsweise durch ein Zusatzelement gebildet ist, welches ausgelegt ist, eine Gleitfähigkeit des Dichtelements zu erhöhen und welches stoffschlüssig (vgl. Co-Extrusion in Abs. [0045]) an dem Dichtbereich befestigt ist.

Es ist daher Aufgabe der vorliegenden Erfindung, ein Dichtelement, eine Anordnung aus einem Element, wie einem Fenster oder einer Tür, und einem Dichtelement sowie ein Verfahren zur Herstellung eines Dichtelements anzugeben, welche eine hohe Dichtwirkung bereitstellen und beim Öffnen oder Schließen nur geringe Bedien(-kräfte) benötigen.

Diese Aufgabe wird durch ein Dichtelement gemäß Anspruch 1, durch eine Anordnung gemäß Anspruch 13, durch ein Dichtelement gemäß Anspruch 14 sowie durch ein Verfahren gemäß Anspruch 15 gelöst. Weitere Vorteile und Merkmale ergeben sich aus den Unteransprüchen sowie der Beschreibung und den beigefügten Figuren.

Erfindungsgemäß umfasst ein Dichtelement, insbesondere ein Dichtprofil für Fenster oder Türen, einen Anordnungsbereich, zum Anordnen des Dichtelements in bzw. an einem Element, insbesondere einem Fenster- oder Türelement, sowie einen Dichtbereich, wobei der Dichtbereich eine Dichtfläche umfasst bzw. aufweist, und wobei die Dichtfläche, zumindest bereichsweise, durch ein Zusatzelement gebildet ist, welches ausgelegt ist, eine Gleitfähigkeit des Dichtelements zu erhöhen, und welches an dem Dichtbereich stoffschlüssig befestigt ist. Gemäß verschiedenen Ausführungsformen kann es sich bei dem weiteren Element z. B. um eine Hebeschiebetür, um eine Flügeltür, eine Terrassentür, eine Leichtlauftür, um ein Klappfenster etc. handeln. Insbesondere bei Schiebetüren kann das Dichtelement mit Vorteil verwendet werden, da diese ggf. lange Verfahrwege aufweisen. Das Element weist z. B. ein (ortsfestes) Bauteil auf, wie einen Türrahmen, sowie ein dazu bewegliches Bauteil, wie z. B. eine Schiebetür, an deren Unterseite (oder auch komplett umlaufend) das Dichtelement zweckmäßigerweise durch seinen Anordnungsbereich befestigt ist. Gemäß einer Ausführungsform ist der Anordnungsbereich beispielsweise als Hohlprofil ausgebildet, um in der Tür befestigt zu werden. Beim Öffnen oder Schließen der Tür gleitet diese z. B.am Türrahmen oder auch am Boden entlang. Die hierbei zwangsläufig auftretenden Reibungskräfte führen zu hohen Bedienkräften beim Öffnen oder Schließen. Vorliegend ist daher das Zusatzelement vorteilhafterweise ausgelegt bzw. ausgebildet, die Gleitfähigkeit des Dichtelements zu erhöhen, wobei das Zusatzelement stoffschlüssig, insbesondere unter dem Einfluss von Druck und/oder Temperatur, befestigt bzw. angeordnet ist. Das Zusatzelement und zumindest der den Anordnungsbereich bildende Teil des Dichtelements sind somit aus verschiedenen Materialien gebildet. Der zweiteilige Aufbau ermöglicht eine optimale Anpassung an die verschiedenen Anforderungen, wobei der Stoffschluss sowohl ein schnelles als auch ein dauerhaftes Verbinden des Zusatzelements mit dem Dichtelement ermöglicht. Die hohe Gleitfähigkeit reduziert die Reibungskräfte und führt zu niedrigen Bedienkräften.

Das Dichtelement kann auch bei klapp- oder kipp- bzw. schwenkbaren Fenstern oder Türen zu Anwendung kommen. Hierzu wird gemäß einer Ausführungsform das Dichtelemente entweder am Fensterrahmen oder auch am Fensterflügel angeordnet, in der Regel bevorzugt umlaufend um die eigentliche Fensteröffnung. Das Dichtelement ermöglicht damit eine Abdichtung der beiden Teile, des Rahmens und des Flügels, zueinander, wobei die Dichtwirkung bzw. der Dichteffekt insbesondere über ein Zusammendrücken oder Verformen des Dichtbereichs erzielt wird, wenn das Fenster, welches in der Regel über entsprechende Scharniere gehalten und gelagert ist, geschlossen wird bzw. ist. Die Kraft, die zu einer Verformung des Dichtbereichs führt, erzeugt naturgemäß Reibungskräfte, wodurch beim Öffnen oder Schließen des Fensters ggf. hohe Bedienkräfte nötig sein können. Das vorgenannte Prinzip, welches am Beispiel eines Fensters erläutert wurde, gilt selbstverständlich auch für alle anderen vergleichbaren Anordnungen, insbesondere z. B. für die anderen vorgenannten Tür- und Fenstertypen.

Bevorzugt ist das Zusatzelement aus einem Material gebildet, welches eine in einem Vergleich zu einem Material des Dichtelements (exklusive des Zusatzelements, bzw. insbesondere zumindest des den Anordnungsbereich und/oder den Dichtbereich ohne Dichtfläche bildende Teil des Dichtelements) höhere Gleitfähigkeit aufweist. Zweckmäßigerweise ist das Material des Dichtelements, insbesondere zumindest des den Anordnungsbereich und/oder den Dichtbereich ohne Dichtfläche bildende Teil des Dichtelements, ein Kunststoff, zweckmäßigerweise ein flexibler Kunststoff, bevorzugt etwa EPDM (Ethylen-Propylen-Dien). Dieser Werkstoff weist eine hohe Wetter- und Ozonresistenz sowie eine hohe thermische Beständigkeit auf, was einen sehr flexiblen Einsatz auch bei starken Witterungseinflüssen ermöglicht. Die Flexibilität bedingt zudem eine hohe Dichtwirkung, da sich der Dichtbereich optimal an die abzudichtenden Bauteile anlegen kann.

Gemäß einer Ausführungsform ist das Zusatzelement ebenfalls ein Kunststoff, bevorzugt eine UHMW-PE Folie (Ultra-Hochmolekulares Polyethylen), insbesondere eine gesinterte UHMW-PE Folie. Dieser Werkstoff zeichnet sich neben den sehr guten Gleiteigenschaften durch eine äußerst hohe Schlagfestigkeit sowie durch eine hervorragende Verschleißbeständigkeit aus. Zweckmäßigerweise weist die vorgenannte Folie eine Schmelztemperatur in einem Bereich von etwa 130-145 °C, bevorzugt etwa 136 °C auf, eine Dichte in einem Bereich von etwa 0,9 bis 0,98 g/cm³, bevorzugt etwa 0,94 g/cm³, eine mittlere Molmassenzahl von etwa 5x10⁶, ein Zugmodul in Längsrichtung von etwa 450 MPa, in Querrichtung von etwa 500 MPa, eine Bruchspannung in Längsrichtung von etwa 40-45 MPa, in Querrichtung von etwa 30-35 MPa, eine Bruchdehnung (längs und quer) von jeweils etwa 300 %, einen Durchgangswiderstand in Ωcm von kleiner 10³, eine Abriebzahl von ca. 1,0 bis 1,15, bevorzugt etwa 1,08, und einen Pigmentgehalt von ca. 1,8 %. In einer bevorzugten Ausführungsform ist die Folie schwarz. Des Weiteren ist die Folie mit Vorteil UV-stabilisiert und chemikalienbeständig. Gemäß einer Ausführungsform handelt es sich bei dem Zusatzelement auch um eine hochmolekulare PE-Folie. Zweckmäßigerweise ist deren Temperaturbeständigkeit im Salzbad bis etwa 250 °C gegeben bzw. liegt in einem Bereich von etwa 220 bis 250 °C (im Salzbad). Das Zusatzelement zeichnet sich allgemein dadurch aus, dass es mit Metallen, insbesondere mit Aluminium, geringe Reibungskoeffizienten aufweist. Dabei ist die konkrete Angabe von Werten schwierig, da diese maßgeblich von der Oberflächenbeschaffenheit des anderen Reibpartners mit abhängen. Nichtsdestotrotz ist hervorzuheben, dass das Zusatzelement äußerst gut mit Aluminiumoberflächen harmoniert. Dabei kann das Alu eloxiert, lackiert oder blank sein. Dies ist insbesondere von Vorteil, als Tür- und Fensterrahmen vermehrt zumindest teilweise aus Aluminium gefertigt sind. Die oben beschriebene Folie weist allerdings auch bei mit PVC beschichteten Tür- oder Fensterrahmen sehr gute Gleiteigenschaften auf.

Das Zusatzelement kann auch aus PA (Polyamid), PETP (Polyethylenterephthalat), PTB (Polybutylenterephthalat), PP (Polypropylen) oder PE-HD (Polyehtylen High Density) gefertigt sein bzw. aus einer Kombination der vorgenannten Materialien.

Erfindungsgemäß ist das Zusatzelement anvulkanisiert. Insbesondere ist also die vorgenannte UHMW-PE Folie anvulkanisiert. Zweckmäßigerweise wird dabei die UHMW-PE Folie bzw. das Zusatzelement im Allgemeinen direkt an einem Rohprofil des Dichtelements angeordnet und anschließend mit vulkanisiert. Zweckmäßigerweise ist das Rohprofil durch eine entsprechende Vorbehandlung gummifreundlich vorbereitet bzw. ausgerüstet, beispielsweise mittels entsprechender Primer- oder Cover-Systeme.

Gemäß einer anderen Ausführungsform kann das Zusatzelement, z. B. die vorgenannten UHMW-PE Folie, auch angeklebt werden, beispielsweise nachdem das Dichtelement als solches bereits vulkanisiert ist.

Zweckmäßigerweise ist das Zusatzelement flächig ausgebildet und angeordnet. Eine flächige Anordnung oder eine zumindest bereichsweise flächige Anordnung ermöglicht gute Gleiteigenschaften, da sichergestellt werden kann, dass die aus dem Zusatzelement gebildete Dichtfläche auch wirklich an dem entsprechend gegenüberliegenden Bauteil anliegt. Die Dichtfläche ist grundsätzlich der Abschnitt des Dichtbereichs, welcher an einem anderen Bauteil, mit dem oder zu dem die Dichtwirkung erfolgen soll, angeordnet ist. "Flächig" bedeutet damit, dass dieser Bereich durch das Zusatzelement, wenigstens bereichsweise gebildet ist.

Insbesondere bedeutet dies, dass entlang einer Längsrichtung des Dichtelements über dessen gesamte Länge das Zusatzelement angeordnet ist. Gemäß einer anderen Ausführungsform ist das Zusatzelement auch nur abschnittsweise angeordnet. Beispielsweise weist ein Abschnitt eine Länge von ca. 0,5 bis ca. 4 cm auf, gefolgt von einem Abstand ohne Zusatzelement, der gemäß einer Ausführungsform ebenfalls ca. 0,5 bis 4 cm lang ist. Bevorzugte Maße/Dimensionen liegen in auch in einem Bereich von etwa 1 bis 3 cm, wobei die Anordnung gemäß einer Ausführungsform vorteilhafterweise regelmäßig entlang der Längsrichtung erfolgt.

Auch quer zur Längsrichtung des Dichtelements gesehen ist das Zusatzelement zweckmäßigerweise flächig angeordnet. Zweckmäßigerweise wird also die gesamte Dichtfläche durch das Zusatzelement gebildet. Berücksichtigt werden muss hierbei, dass der Dichtbereich ggf. zusammengedrückt wird, wodurch sich, abhängig vom aufgebrachten Druck, eine ggf. unterschiedlich große Dichtfläche ergeben kann. Insbesondere bei einer Ausführungsform, bei welcher der Dichtbereich als Hohlprofil geformt ist, z. B. als im Wesentlichen rundes Hohlprofil, liegt ein Verhältnis einer Breite des Dichtbereichs im unbelasteten Zustand zu einer Breite des Zusatzelements in einem Verhältnis von ca. 0,6 bis 0,9, bevorzugt in einem Bereich von etwa 0,7 bis 0,85. Wenn der Dichtbereich nicht als Hohlprofil ausgebildet ist, kann das angesprochene Verhältnis aber auch 1 betragen.

Gemäß einer Ausführungsform weist der Anordnungsbereich im Querschnitt gesehen eine im Wesentlichen rechteckige Form auf, mit einer Höhe von etwa 0,5 bis 1,5 mm, zweckmäßigerweise etwa 0,8 mm. Die Breite des rechteckigen Querschnitts kann dabei in einem Bereich von 2 mm bis hinauf zu 200 mm liegen. Ein so geformter Anordnungsbereich wird zweckmäßigerweise in eine entsprechend ausgebildete Geometrie oder Fuge des entsprechenden Fenster- oder Türelements eingedrückt.

Sind an der Dichtfläche nur schmale/dünne Streifen aus einem gleitfähigen Material angeordnet, kann dies den Nachteil mit sich bringen, dass sich zwischen diesen ggf. Schmutz sammelt, insbesondere wenn sie gegenüber dem eigentlichen Dichtelement hervorstehen oder einen Versatz aufweisen. Das flächige Zusatzelement oder eine Vielzahl von flächigen Zusatzelementen, welche z. B. rund, oval, eckig etc. ausgebildet sein können, beseitigt diesen Nachteil.

Zweckmäßigerweise ist das Zusatzelement flexibel, insbesondere verformbar, ausgebildet. Damit wird ein optimales Anliegen des Dichtbereichs an das gegenüberliegende Bauteil erreicht, wodurch die Dichtwirkung optimiert wird. Zweckmäßigerweise trägt das Zusatzelement also nicht zu einer Versteifung des Dichtbereichs bei sondern ermöglicht eine gleichmäßige Krafteinleitung und ein gleichmäßiger Verformung, was der Dichtwirkung zugutekommt.

Gemäß einer Ausführungsform weist das Zusatzelement eine Dicke in einem Bereich von 0,01 bis 0,15 mm auf. Bevorzugt liegt die Dicke bei etwa 0,05 bis 0,12 mm. Entlang der Längsrichtung des Dichtelements/Dichtprofils ist die Länge zweckmäßigerweise konstant. Das Gleiche gilt quer zur Längsrichtung. Grundsätzlich bietet die konstante Dicke den Vorteil, dass sich der Dichtbereich überall, insbesondere hinsichtlich seiner Verformungseigenschaften, ähnlich verhält. Bezogen auf eine Wandstärke des Dichtbereichs hat sich gezeigt, dass ein guter Kompromiss aus Dichtwirkung und Gleitfähigkeit erreicht wird, wenn ein Verhältnis einer Dicke des Zusatzelements im Vergleich zu einer Wandstärke des Dichtbereichs in einem Verhältnis von etwa 0,01 bis 0,6, bevorzugt in einem Bereich von 0,05 bis 0,5, liegt. Gemäß einer Ausführungsform weist das Zusatzelement einen Versatz zum Dichtbereich auf, der im Bereich der vorgenannten Dicken liegt, also beispielsweise 0,5 bis etwa 2 mm beträgt. Wenn die Dichtfläche vollständig durch das Zusatzelement gebildet ist, ergibt sich dabei auch nicht das Problem, dass sich durch ggf. entstehende Zwischenräume zwischen verschiedenen Zusatzelementen Schmutz ansammelt.

Alternativ ist das Dichtelement auch derart ausgebildet, dass vom Zusatzelement zum Dichtbereich kein Übergang bzw. keine Stufe vorhanden ist.

Zweckmäßigerweise ist der Dichtbereich des Dichtelements als Hohlprofil ausgebildet. Damit wird, z. B. bei Verwendung eines flexiblen Kunststoffmaterials, eine Verformbarkeit bereitgestellt, welche die Dichtwirkung unterstützt. Mit anderen Worten kann also ein Druck durch das Zusatzelement erzeugt werden, wodurch der Dichtbereich beispielsweise gestaucht wird. Mit Vorteil ist gleichzeitig aber durch die Dichtfläche bzw. das Zusatzelement die hohe Gleiteigenschaft des Dichtelements bereitgestellt, sodass neben der guten Dichtwirkung gleichzeitig eine hohe Gleitfähigkeit und damit eine geringe Bedienkraft realisiert werden. Möglich wird damit eine sehr hohe Gleiteigenschaft bei gleichzeitiger Verpressung des Dichtelements bzw. des Dichtprofils. Auf diese Weise werden Schließkräfte vergleichbar mit Bürstendichtungen von kleiner als 10 N/m über den gesamten Verfahrweg, beispielsweise des Türelements, erzielt.

Gemäß einer anderen Ausführungsform ist der Dichtbereich entlang der Längsrichtung gesehen flach ausgebildet, weist also kein Hohlprofil auf. Beispielsweise kann ein derart gestalteter Dichtbereich über eine Art Steg mit dem Anordnungsbereich verbunden sein, wodurch wieder eine Flexibilität bereitgestellt wird.

Erfindungsgemäß ist eine Anordnung aus einem Element, insbesondere einem Fenster- oder Türelement, und einem erfindungsgemäßen Dichtelement vorgesehen. Das Element, beispielswiese ein Tür- oder Fensterelement, kann aus einem Kunststoff, wie PVC (Polyvinylchlorid), oder einem Metall, wie Alu, oder auch aus Holz gebildet/gefertigt sein. Eine Kombination der vorgenannten Materialien ist ebenso möglich.

Die Erfindung bezieht sich auch auf ein erfindungsgemäßes Dichtelement, welches durch ein Vulkanisationsverfahren hergestellt ist. Das Vulkanisationsverfahren ist grundsätzlich bekannt. Hierunter wird die chemisch-physikalische Umwandlung verstanden, bei welcher ein vorwiegend plastischer Kautschuk in den gummielastischen Zustand übergeht. Diesen Vorgang, der durch Verknüpfung von Makromolekülen an ihren reaktionsfähigen Stellen erfolgt, insbesondere unter dem Einfluss von Druck und Temperatur, wird Vernetzung genannt. Als Vernetzer kommt beispielsweise Schwefel zur Anwendung. Die Temperatur bei der Durchführung der Vulkanisation beträgt etwa 120 bis 160 °C. Gemäß einer Ausführungsform erfolgt die Vulkanisation in einem Flüssigkeitsbad, insbesondere in einem Salzbad. Daneben kann aber auch die Vulkanisation in Heißluft (UHF-Vulkanisation) zum Einsatz kommen oder die Vulkanisation im Dampfrohr.

Erfindungsgemäß umfasst ein Verfahren zur Herstellung eines Dichtelements, insbesondere eines Dichtprofils, die Schritte:
- Bereitstellen eines Rohprofils eines Dichtelements, umfassend einen Anordnungsbereich sowie einen Dichtbereich;
- Bereitstellen eines Zusatzelements;
- Anordnen des Zusatzelements auf den Dichtbereich;
- Vulkanisieren des Zusatzelements zusammen mit dem Rohprofil.

Es versteht sich, dass die für das erfindungsgemäße Dichtelement genannten Vorteile und Merkmale analog und entsprechend für die Anordnung und das vorgenannte Verfahren gelten sowie umgekehrt.

Weitere Vorteile und Merkmale ergeben sich aus der nachfolgenden Beschreibung verschiedener Ausführungsformen des erfindungsgemäßen Dichtelements mit Bezug auf die beigefügten Figuren. Es zeigen:
- Figur 1:: eine perspektivische Ansicht einer Ausführungsform eines Dichtelements;
- Figur 2:: Schnittansichten weiterer Ausführungsformen eines Dichtelements.

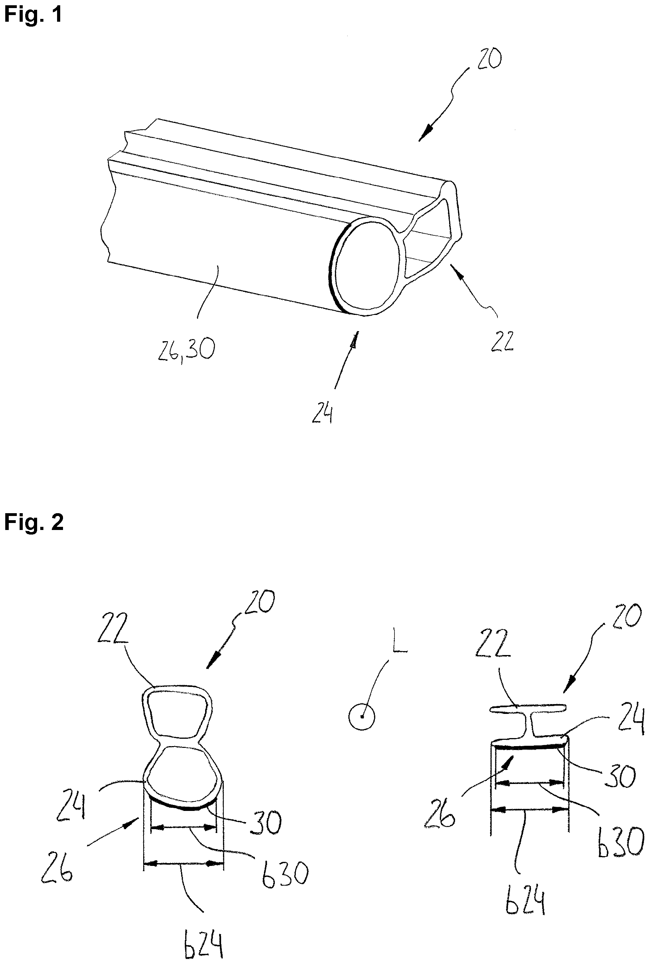

**Fig. 1** zeigt ein Dichtelement 20, insbesondere ein Dichtprofil, welches einen Anordnungsbereich 22 sowie einen Dichtbereich 24 umfasst. Der Anordnungsbereich 22 sowie der Dichtbereich 24 sind beide als Hohlkörper ausgebildet. Zu erkennen ist, dass eine Dichtfläche 26 des Dichtbereichs 24 durch ein Zusatzelement 30 gebildet ist. Das Zusatzelement 30 ist flächig ausgebildet und angeordnet. Damit wird eine sehr hohe Gleiteigenschaft des Dichtelements 20 bei gleichzeitiger Verpessung des Dichtelements 20 erreicht. Die damit erzielbaren Schließkräfte sind vergleichbar mit Bürstendichtungen und liegen über den gesamten Verfahrweg, beispielsweise eines entsprechenden Türelements, in einem Bereich von kleiner als 10 N/m.

**Fig. 2** zeigt zwei Dichtelemente 20 entlang einer Längsrichtung L gesehen. In beiden Fällen handelt es sich um Dichtprofile, wie sie z. B. bei Fenster- oder Türelementen zum Einsatz kommen können. Bei der in der linken Bildhälfte dargestellten Ausführungsform sind ein Anordnungsbereich 22 und ein Dichtbereich 24 als Hohlkörper ausgebildet. An einer Dichtfläche 26 ist ein Zusatzelement 30 angeordnet. Eine Breite b30 des Zusatzelements 30 liegt zu einer Breite des b24 Dichtbereichs 24 in einem Verhältnis von etwa 0,85 bis 0,95. Die Breite b30 ist derart bemessen, dass im eingebauten Zustand das Zusatzelement 30 vollständig am anderen "Reibpartner" anliegt, wobei hierbei die Verformung des Dichtbereichs 24 berücksichtigt werden muss.

Bei der in der rechten Bildhälfte dargestellten Ausführungsform sind ein Anordnungsbereich 22 und eine Dichtbereich 24 nicht als Hohlprofil ausgebildet. Der Anordnungsbereich 22 weist einen rechteckigen Querschnitt auf, welcher beispielsweise eine Höhe von etwa 0,5 bis 1,50 mm und eine Breite von ca. 3 mm bis hinauf zu 200 mm aufweist. Dadurch, dass beide Teile aber über eine Art Steg verbunden sind, wir auch hier eine Flexibilität bereitgestellt, welche der Dichtwirkung und den Gleiteigenschaften zugutekommt. Ein Verhältnis einer Breite b30 des Zusatzelements 30 zu einer Breite b24 des Dichtbereichs 24 ist geringfügig größer als in der links dargestellten Ausführungsform, was insbesondere der Tatsache geschuldet ist, dass die in der linken Bildhälfte dargestellte Ausführungsform der Dichtfläche 26 (im unbelasteten Zustand) gewölbt ist, während bei der rechts dargestellten Ausführungsform ein im Wesentlichen ebene Dichtfläche 26 gebildet ist.

### Bezugszeichenliste

- 20: Dichtelement
- 22: Anordnungsbereich
- 24: Dichtbereich
- b24: Breite Dichtbereich
- 26: Dichtfläche
- 30: Zusatzelement
- b30: Breite Zusatzelement
- L: Längsrichtung

## Patentansprüche

1. Dichtelement (20), insbesondere Dichtprofil für Fenster oder Türen, umfassend
einen Anordnungsbereich (22), zum Anordnen des Dichtelements (20) an einem Element, insbesondere einem Fenster- oder Türelement, und einen Dichtbereich (24),
wobei der Dichtbereich (24) eine Dichtfläche (26) aufweist,
wobei die Dichtfläche (26) zumindest bereichsweise durch ein Zusatzelement (30) gebildet ist,
wobei das Zusatzelement (30) ausgelegt ist, eine Gleitfähigkeit des Dichtelements (20) zu erhöhen, und
wobei das Zusatzelement (30) stoffschlüssig an dem Dichtbereich (24) angeordnet ist, **dadurch gekennzeichnet, dass** das Zusatzelement (30) anvulkanisiert ist.

2. Dichtelement (20) nach Anspruch 1,
wobei das Zusatzelement (30) aus einem Material gebildet ist, welches eine höhere Gleitfähigkeit aufweist als das Material des Dichtelements (20).

3. Dichtelement (20) nach einem der vorhergehenden Ansprüche,
wobei das Zusatzelement (30) eine UHMW-PE Folie ist,
welche vorzugsweise gesintert ist und/oder
welche vorzugsweise eine Schmelztemperatur in einem Bereich von etwa 130-145 °C und/oder eine Dichte in einem Bereich von etwa 0,9 bis 0,98 g/cm³ aufweist.

4. Dichtelement (20) nach einem der Ansprüche 1 - 2,
wobei das Zusatzelement (30) aus PA (Polyamid), PETP (Polyethylenterephthalat), PTB (Polybutylenterephthalat), PP (Polypropylen) oder PE-HD (Polyehtylen High Density) ausgebildet ist.

5. Dichtelement (20) nach einem der vorhergehenden Ansprüche,
wobei das Zusatzelement (30) direkt an ein Rohprofil des Dichtelements (20) anvulkanisiert ist.

6. Dichtelement (20) nach einem der vorhergehenden Ansprüche,
wobei das Zusatzelement (30) flächig ausgebildet und angeordnet ist.

7. Dichtelement (20) nach einem der vorhergehenden Ansprüche,
wobei das Verhältnis der Breite des Dichtbereichs (24) im unbelasteten Zustand zur Breite des Zusatzelements (30) in einem Verhältnis von ca. 0,6 bis 0,9 liegt.

8. Dichtelement (20) nach einem der vorhergehenden Ansprüche,
wobei das Zusatzelement (30) flexibel, insbesondere verformbar, ist.

9. Dichtelement (20) nach einem der vorhergehenden Ansprüche,
wobei das Zusatzelement (30) eine Dicke in einem Bereich von etwa 0,1 bis 2 mm aufweist.

10. Dichtelement (20) nach einem der vorhergehenden Ansprüche,
wobei das Verhältnis der Dicke des Zusatzelements (30) im Vergleich zur Wandstärke des Dichtbereich (24) in einem Verhältnis von etwa 0,01 bis 0,6 liegt.

11. Dichtelement (20) nach einem der vorhergehenden Ansprüche,
wobei der Anordnungsbereich (22) und/oder der Dichtbereich (24) als Hohlprofil ausgebildet ist.

12. Dichtelement (20) nach einem der vorhergehenden Ansprüche,
wobei der Dichtbereich (24) entlang der Längsrichtung gesehen flach ausgebildet, und vorzugsweise über einen Steg mit dem Anordnungsbereich (22) verbunden ist.

13. Anordnung aus einem Element, insbesondere einem Fenster- oder Türelement, und einem Dichtelement (20) nach einem der vorhergehenden Ansprüche.

14. Dichtelement (20) nach einem der Ansprüche 1-12, hergestellt durch ein Vulkanisationsverfahren.

15. Verfahren zur Herstellung eines Dichtelements (20), insbesondere eines Dichtprofils,
umfassend die Schritte:
- Bereitstellen eines Rohprofils eines Dichtelements (20) umfassend einen Anordnungsbereich (22) sowie einen Dichtbereich (24);
- Bereitstellen eines Zusatzelements (30);
- Anordnen des Zusatzelements (30) auf dem Dichtbereich (24);
- Vulkanisieren des Zusatzelements (30) zusammen mit dem Rohprofil.

## Claims

1. Sealing element (20), in particular sealing profile for windows or doors, comprising
an arrangement region (22) for arranging the sealing element (20) on an element, in particular a window element or door element, and a sealing region (24), wherein the sealing region (24) has a sealing surface (26),
wherein the sealing surface (26) is formed at least in certain regions by an additional element (30),
wherein the additional element (30) is designed to increase a slidability of the sealing element (20), and
wherein the additional element (30) is arranged on the sealing region (24) in an integrally bonded manner, **characterized in that** the additional element (30) is vulcanized on.

2. Sealing element (20) according to Claim 1,
wherein the additional element (30) is formed from a material which has a higher slidability than the material of the sealing element (20).

3. Sealing element (20) according to one of the preceding claims,
wherein the additional element (30) is a UHMW-PE film
which is preferably sintered and/or
which preferably has a melting temperature in a range from about 130-145°C and/or a density in a range from about 0.9 to 0.98 g/cm³.

4. Sealing element (20) according to one of Claims 1-2,
wherein the additional element (30) is formed from PA (polyamide), PETP (polyethylene terephthalate), PTB (polybutylene terephthalate), PP (polypropylene) or PEHD (polyethylene high-density).

5. Sealing element (20) according to one of the preceding claims,
wherein the additional element (30) is directly vulcanized onto a raw profile of the sealing element (20) .

6. Sealing element (20) according to one of the preceding claims,
wherein the additional element (30) is designed and arranged in a planar manner.

7. Sealing element (20) according to one of the preceding claims,
wherein the ratio of the width of the sealing region (24) in the unloaded state to the width of the additional element (30) lies in a ratio from about 0.6 to 0.9.

8. Sealing element (20) according to one of the preceding claims,
wherein the additional element (30) is flexible, in particular deformable.

9. Sealing element (20) according to one of the preceding claims,
wherein the additional element (30) has a thickness in a range from about 0.1 to 2 mm.

10. Sealing element (20) according to one of the preceding claims,
wherein the ratio of the thickness of the additional element (30) in comparison to the wall thickness of the sealing region (24) lies in a ratio from about 0.01 to 0.6.

11. Sealing element (20) according to one of the preceding claims,
wherein the arrangement region (22) and/or the sealing region (24) are/is formed as a hollow profile.

12. Sealing element (20) according to one of the preceding claims,
wherein, as seen along the longitudinal direction, the sealing region (24) is of flat design, and is preferably connected to the arrangement region (22) via a web.

13. Arrangement consisting of an element, in particular a window element or door element, and a sealing element (20) according to one of the preceding claims.

14. Sealing element (20) according to one of Claims 1-12, produced by a vulcanization method.

15. Method for producing a sealing element (20), in particular a sealing profile,
comprising the following steps:
- providing a raw profile of a sealing element (20) comprising an arrangement region (22) and a sealing region (24);
- providing an additional element (30);
- arranging the additional element (30) on the sealing region (24);
- vulcanizing the additional element (30) together with the raw profile.

## Revendications

1. Élément d'étanchéité (20), en particulier profilé d'étanchéité pour fenêtres ou portes, comportant
une zone d'agencement (22) pour agencer l'élément d'étanchéité (20) sur un élément, en particulier un élément de fenêtre ou de porte, et
une zone d'étanchéité (24),
la zone d'étanchéité (24) présentant une surface d'étanchéité (26),
la surface d'étanchéité (26) étant formée au moins localement par un élément supplémentaire (30),
l'élément supplémentaire (30) étant conçu pour augmenter la capacité de glissement de l'élément d'étanchéité (20), et
l'élément supplémentaire (30) étant agencé par coopération de matière sur la zone d'étanchéité (24),
**caractérisé en ce que**
l'élément supplémentaire (30) est rapporté par vulcanisation.

2. Élément d'étanchéité (20) selon la revendication 1,
dans lequel l'élément supplémentaire (30) est réalisé d'un matériau qui présente une capacité de glissement supérieure à celle du matériau de l'élément d'étanchéité (20).

3. Élément d'étanchéité (20) selon l'une des revendications précédentes, dans lequel l'élément supplémentaire (30) est une feuille en UHMW-PE qui est de préférence frittée et/ou qui présente de préférence une température de fusion dans une plage d'environ 130 à 145 °C et/ou une densité dans une plage d'environ 0,9 à 0,98 g/cm³.

4. Élément d'étanchéité (20) selon l'une des revendications 1 à 2,
dans lequel l'élément supplémentaire (30) est réalisé en PA (polyamide); PETP (polyéthylène téréphtalate), PTB (polybutylène téréphtalate), PP (polypropylène) ou PE-HD (polyéthylène de haute densité).

5. Élément d'étanchéité (20) selon l'une des revendications précédentes, dans lequel l'élément supplémentaire (30) est rapporté par vulcanisation directement sur un profilé brut de l'élément d'étanchéité (20).

6. Élément d'étanchéité (20) selon l'une des revendications précédentes, dans lequel l'élément supplémentaire (30) est réalisé et agencé de façon surfacique.

7. Élément d'étanchéité (20) selon l'une des revendications précédentes, dans lequel le rapport de la largeur de la zone d'étanchéité (24) à l'état non chargé sur la largeur de l'élément supplémentaire (30) est d'environ 0,6 à 0,9.

8. Élément d'étanchéité (20) selon l'une des revendications précédentes, dans lequel l'élément supplémentaire (30) est flexible, en particulier déformable.

9. Élément d'étanchéité (20) selon l'une des revendications précédentes, dans lequel l'élément supplémentaire (30) présente une épaisseur dans la plage d'environ 0,1 à 2 mm.

10. Élément d'étanchéité (20) selon l'une des revendications précédentes, dans lequel le rapport de l'épaisseur de l'élément supplémentaire (30) sur l'épaisseur de paroi de la zone d'étanchéité (24) est d'environ 0,01 à 0,6.

11. Élément d'étanchéité (20) selon l'une des revendications précédentes, dans lequel la zone d'agencement (22) et/ou la zone d'étanchéité (24) sont réalisées sous forme de profilé creux.

12. Élément d'étanchéité (20) selon l'une des revendications précédentes, dans lequel la zone d'étanchéité (24), vue en direction longitudinale, est réalisée plane et est de préférence reliée à la zone d'agencement (22) par une âme.

13. Ensemble constitué d'un élément, en particulier d'un élément de fenêtre ou de porte, et d'un élément d'étanchéité (20) selon l'une des revendications précédentes.

14. Élément d'étanchéité (20) selon l'une des revendications 1 à 12, réalisé par un procédé de vulcanisation.

15. Procédé de réalisation d'un élément d'étanchéité (20), en particulier d'un profilé d'étanchéité,
comprenant les étapes suivantes consistant à :
- fournir un profilé brut d'un élément d'étanchéité (20) comprenant une zone d'agencement (22) et une zone d'étanchéité (24) ;
- fournir un élément supplémentaire (30) ;
- agencer l'élément supplémentaire (30) sur la zone d'étanchéité (24) ;
- assembler par vulcanisation l'élément supplémentaire (30) avec le profilé brut.
